# EUROPEAN PATENT SPECIFICATION

(11) **EP 4 512 656 B1**
(45) Date of publication and mention of the grant of the patent: **04.03.2026**
(21) Application number: 23893451.7
(22) Date of filing: 09.10.2023
(51) Int. Cl.: G06F 1/26, G06F 1/3215, G06F 1/3287, B60L 53/14, B60L 3/12, B60L 53/10, H02J 7/00

(54) **BMS SLEEP WAKE-UP CIRCUIT AND METHOD, AND BMS AND ELECTRIC DEVICE**
BMS-SCHLAFAUFWECKSCHALTUNG UND -VERFAHREN SOWIE BMS UND ELEKTRISCHE VORRICHTUNG
CIRCUIT ET PROCÉDÉ DE RÉVEIL DE SOMMEIL DE BMS, BMS ET DISPOSITIF ÉLECTRIQUE

(30) Priority: 24.11.2022 CN 202211484339
(43) Date of publication of application: 26.02.2025
(73) Proprietor: Contemporary Amperex Technology (Hong Kong) Limited, Central, Hong Kong (HK)
(72) Inventor: CHEN, Weijie, Ningde, Fujian 352100 (CN); LI, Weiqiang, Ningde, Fujian 352100 (CN)
(74) Representative: Ziebig Hengelhaupt Intellectual Property Attorneys Patentanwaltskanzlei PartGmbB
(86) International application number: PCT/CN2023/123613
(87) International publication number: WO 2024/109359

(56) References cited:
- WO-A1-2022/198673
- CN-A- 110 254 378
- CN-A- 112 009 306
- CN-A- 112 706 653
- CN-A- 113 147 479
- CN-A- 116 252 677
- CN-U- 210 101 377
- CN-U- 212 219 965

## Description

### TECHNICAL FIELD

This application relates to the field of battery management, and specifically to a BMS sleep wake-up circuit and method, a BMS, and an electric device.

### BACKGROUND

Charging is an indispensable function for new energy electric vehicle products. For a ground charging interface of a national standard charging gun (such as AC_CC interface of an alternating current charging gun and DC_CC2 interface of a direct current charging gun), the vehicle design requires that the charging gun should be able to wake up the battery management system (Battery Management System, BMS) after being plugged into the vehicle. Engineers focus on the plug-in wake-up function during design, and often overlook the need to support BMS to enter sleep while keeping the charging gun plugged. In this case, if the charging is completed or stopped without unplugging the charging gun, the BMS cannot enter sleep, thus increasing the lead-acid power consumption of the vehicle.

CN 112 706 653 A discloses an alternating current charging CC signal detection circuit with awakening function comprising a sampling module whose output end is connected with input end of battery management system main control chip that is connected with sampling module.

### SUMMARY

In view of the preceding problem, embodiments of this application provide a BMS sleep wake-up circuit and method, a BMS, and an electric device, which can solve the problem that a BMS cannot enter sleep unless a charging device such as a charging gun is unplugged.

According to a first aspect, an embodiment of this application provides a BMS sleep wake-up circuit according to claim 1.

In the technical solution of this embodiment of this application, when the charging device is plugged in, the enabling circuit is configured to, in response to the charging device being plugged in, generate an enabling level to enable the wake-up chip to activate to wake up the BMS in sleeping state (that is, activating), and the control circuit outputs the self-locking signal to enable the wake-up chip to keep waking up the BMS. Additionally, under the condition that the charging device remains plugged in, when sleep is needed, after the self-locking signal is canceled, the wake-up chip is turned off, so that the BMS can enter the sleeping state, solving the problem in related art that a BMS cannot enter sleep unless a charging device is unplugged. Furthermore, as the generated enabling level inevitably generates an edge signal, the wake-up chip can be triggered by either the edge signal or the level signal, allowing the BMS to enter sleep while the charging device remains plugged in, thereby reducing lead-acid consumption of the battery.

Additionally, in the technical solution of this embodiment of this application, the self-locking signal can allow the enabling circuit to disconnect from the first detection port so as to avoid mutual interference between the enabling circuit and the charging device, and can also prevent the enabling circuit from being interfered with and continuing to generate the enabling level, so that the BMS can enter sleep smoothly as needed.

In some embodiments, the communication interface of the charging device is grounded through an impedance circuit.

In the technical solution of this embodiment of this application, the way to trigger the enabling circuit in response to the charging device being plugged in is by grounding the communication interface of the charging device, thereby generating an enabling level, to be specific, providing a low-level signal to the first detection port, which is applicable to an AC_CC interface of an alternating current charging gun and a DC_CC2 interface of a direct current charging gun. The solution is simple and widely used. In other embodiments, the way to trigger the enabling circuit in response to the charging device being plugged in may also be by providing a rising edge signal, a falling edge signal, or a high-level signal.

In some embodiments, the enabling circuit includes:
a trigger module connected to the first detection port and the control circuit, configured to generate a first level signal in response to the charging device being plugged in, and further configured to, in response to the self-locking signal, maintain the first level signal and disconnect from the first detection port; and
an enabling module connected to the trigger module, and configured to generate one enabling level based on one first level signal.

In the technical solution of this embodiment of this application, an embodiment of an enabling circuit is provided, where the trigger module generates a first level signal in response to the charging device being plugged in (for example, being triggered by the communication interface or first detection port being grounded). The enabling module generates an enabling level based on the first level signal to activate the wake-up chip to wake up the BMS in sleeping state. Additionally, the enabling module generates one enabling level based on one first level signal, and therefore, after receiving a self-locking signal, the trigger module maintains the first level signal and disconnects from the first detection port, which avoids mutual interference between the BMS sleep wake-up circuit and the charging device. Under the condition that the BMS needs to enter sleep without being enabled at the enabling level, canceling the self-locking signal allows smooth entry sleep. The circuit is simple and reliable.

In some embodiments, the trigger module includes a first switching transistor, a second switching transistor, a potential-divider network, a first resistor, and a second resistor, where the potential-divider network is configured to be connected to a power supply and has a first potential-divider output terminal and a second potential-divider output terminal;
a first terminal of the first switching transistor is connected to the first detection port, a second terminal of the first switching transistor is connected to the first potential-divider output terminal, a control terminal of the first switching transistor and a control terminal of the second switching transistor are connected to the second potential-divider output terminal, the control terminal of the first switching transistor and the control terminal of the second switching transistor are further connected to the control circuit through the first resistor for receiving the self-locking signal, a first terminal of the second resistor is connected to the first potential-divider output terminal, a second terminal of the second resistor and a first terminal of the second switching transistor are connected together as an output of the trigger module, and a second terminal of the second switching transistor is grounded.

In the technical solution of this embodiment of this application, an implementation of the trigger module is provided. The first level signal is, for example, a low-level signal. The self-locking signal allows the trigger module to disconnect from the first detection port through the first switching transistor so as to avoid mutual interference between the trigger module and the charging device, and also allows the second switching transistor to remain turned on, so that the trigger module keeps outputting the first level signal, and the enabling circuit is prevented from continuing to generate the enabling level. This allows the BMS to enter sleep smoothly as needed. The circuit has a simple structure, reliability, and low-cost.

In some embodiments, the trigger module further includes a first unidirectional conduction element, and the first terminal of the first switching transistor is forward connected to the first detection port through the first unidirectional conduction element.

In the technical solution of this embodiment of this application, the first unidirectional conduction element can prevent a current from the communication interface of the charging device from flowing into the BMS sleep wake-up circuit, thereby avoiding mutual interference.

In some embodiments, the enabling module includes a third switching transistor, a fourth switching transistor, a fifth switching transistor, a potential-divider unit, an energy storage element, a third resistor, a fourth resistor, and a fifth resistor; where
a control terminal of the third switching transistor is connected to an output of the trigger module, a first terminal of the third switching transistor is connected to a power supply, a second terminal of the third switching transistor is grounded through the potential-divider unit, a second terminal of the third switching transistor is connected to a control terminal of the fourth switching transistor, a first terminal of the fourth switching transistor is configured to be connected to the power supply through the third resistor, a second terminal of the fourth switching transistor is grounded, a first terminal of the fourth switching transistor is connected to a first terminal of the energy storage element, a second terminal of the energy storage element is connected to a control terminal of the fifth switching transistor, a first terminal of the fifth switching transistor is configured to be connected to the power supply, the fourth resistor is connected between a control terminal and the first terminal of the fifth switching transistor, a second terminal of the fifth switching transistor is grounded through the fifth resistor, and the second terminal of the fifth switching transistor is connected to an output terminal of the enabling module; and
the third switching transistor is turned on based on the first level signal to turn on the fourth switching transistor to drive the fifth switching transistor to turn on, so that the output terminal of the enabling module outputs the enabling level, after the fourth switching transistor is turned on, the power supply charges the energy storage element through the fourth resistor, and after a voltage of the energy storage element reaches a voltage of turning off the fifth switching transistor, the fifth switching transistor is turned off to stop outputting the enabling level;
where duration from the power supply starting to charge the energy storage element to reaching the voltage of turning off the fifth switching transistor is duration of outputting the enabling level.

In the technical solution of this embodiment of this application, when the fourth switching transistor is turned on, a voltage across the energy storage element, for example, a capacitor, does not change abruptly, so that the control terminal of the fifth switching transistor presents a low level and turns on, thereby outputting the enabling level. Simultaneously, the power supply charges the energy storage element. The voltage rises until it causes the fifth switching transistor to turn off to stop outputting the enabling level. The fifth switching transistor can be turned on for a certain time window by configuring the duration of the enabling level for the charging process of the energy storage element, so as to output the enabling level and activate the wake-up chip, thereby waking up the BMS in sleeping state.

In some embodiments, the enabling module further includes a second unidirectional conduction element. The second unidirectional conduction element is forward connected between the second terminal of the fifth switching transistor and the output terminal of the enabling module. The output terminal of the enabling module is connected to a first enabling pin of the wake-up chip. This prevents a voltage from another wake-up source jointly using the first enabling pin of the wake-up chip from being plugged in and affecting the normal working of the enable module.

In some embodiments, the control circuit includes one of control chips in the BMS, and a self-locking pin of the control chip is connected to the second enabling pin of the wake-up chip and the enabling circuit to provide the self-locking signal.

In the technical solution of this embodiment of this application, the enabling circuit and the control circuit are connected to different pins of the wake-up chip, so that the control of the wake-up chip by the enabling level and the control of the wake-up chip to the self-locking signal are independent of each other, and thus the wake-up chip can be turned off after the self-locking signal is canceled, so as to achieve sleep, thereby reducing lead-acid consumption of the battery.

In some embodiments, the wake-up chip is a power supply chip for supplying power to the BMS, or a control chip for controlling the BMS to sleep or wake up.

In some embodiments, the control circuit and the wake-up chip are a same control chip. This facilitates the system settings.

In some embodiments, the BMS sleep wake-up circuit further includes a sampling circuit, connected to an output of the enabling circuit, configured to output a gun plugged signal when the enabling signal is detected, and configured to output a gun unplugged signal when no enabling signal is detected. This facilitates the system in confirming a working status.

In some embodiments, the control circuit is connected to the sampling circuit and is further configured to stop outputting the self-locking signal upon receiving the gun unplugged signal. This facilitates the BMS entering gun unplugged sleep.

According to a second aspect, an embodiment of this application provides a BMS sleep wake-up method according to claim 12.

In the technical solution of this embodiment of this application, when the charging device is plugged in, in response to the charging device being plugged in, the BMS generates the enabling level, enables the wake-up chip to activate to wake up the BMS, and outputs the self-locking signal to enable the wake-up chip to keep waking up the BMS. Additionally, under the condition that the charging device remains plugged in, when the BMS needs to sleep, the self-locking signal is canceled and the wake-up chip is turned off, allowing the BMS to enter sleep. This solves the problem in related art that a BMS cannot enter a sleeping state unless a charging device is unplugged. Furthermore, as the generated enabling level produces an edge signal, the wake-up chip can be triggered by either the edge signal or the level signal, allowing the BMS to sleep while the charging device remains plugged in, thereby reducing lead-acid consumption of the battery.

Additionally, in the technical solution of this embodiment of this application, the self-locking signal can disconnect a device from the charging device so as to avoid mutual interference between the device and the charging device, and it can also prevent the enabling level from continuing to be generated due to interference, allowing the BMS to enter sleep smoothly as needed.

According to a third aspect, an embodiment of this application provides a BMS, including the foregoing BMS sleep wake-up circuit.

In the technical solution of this embodiment of this application, when a charging device is plugged in, in response to the charging device being plugged in, the BMS enables a wake-up chip to activate to wake up the BMS in sleeping state, and the awakened BMS outputs a self-locking signal to keep activating the wake-up chip. Additionally, under the condition that the charging device remains plugged in, when sleep is needed, the BMS can enter a sleeping state after the self-locking signal is canceled, solving the problem that a BMS cannot enter a sleeping state unless a charging device is unplugged, thereby reducing lead-acid consumption of the battery.

According to a fourth aspect, this application provides an electric device, including a battery and the foregoing BMS.

In the technical solution of this embodiment of this application, when the charging device is plugged in, in response to the trigger to the charging device being plugged in, the electric device enables a wake-up chip to activate to wake up the BMS in sleeping state of the electric device, and the awakened BMS outputs a self-locking signal to keep activating the wake-up chip. Additionally, under the condition that the charging device remains plugged in, when sleep is needed, the BMS can enter a sleeping state as needed after the self-locking signal is canceled, solving the problem that a BMS cannot enter a sleeping state unless a charging device is unplugged, thereby reducing lead-acid consumption of the battery.

The foregoing description is merely an overview of the technical solution of this application. To more clearly understand the technical means in this application so that they can be implemented according to the content of the specification, and to make the foregoing and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:
FIG. 1 is a module diagram of a BMS sleep wake-up circuit according to some embodiments of this application;
FIG. 2 is a module diagram of a BMS sleep wake-up circuit according to some embodiments of this application;
FIG. 3 is a circuit diagram of a BMS sleep wake-up circuit according to some embodiments of this application; and
FIG. 4 is a flowchart of a BMS sleep wake-up method according to some embodiments of this application.

Reference signs in specific embodiments are as follows:
charging device 10, communication interface 11, first detection port 110, enabling circuit 120, trigger module 122, enabling module 124, control circuit 130, sampling circuit 140, wake-up chip 200;
first switching transistor Q1, second switching transistor Q2, third switching transistor Q3, fourth switching transistor Q4, impedance circuit R0, fifth switching transistor Q5, energy storage element C1, first resistor R1, second resistor R2, third resistor R3, fourth resistor R4, fifth resistor R5, first enabling pin EN1, second enabling pin EN2, first unidirectional conduction element D1, second unidirectional conduction element D2, and power supply U1.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

A charging wake-up function is often used in conjunction with an edge-triggered wake-up function of a wake-up chip. However, currently, many application chips do not support edge wake-up. Based on this, the inventive concept of this application is to allow a wake-up chip used in a charging wake-up function to have a basic level wake-up function, and certainly also to allow it to be compatible with an edge-triggered wake-up function. Specifically, the embodiments of this application mainly introduce the inventive concept of a BMS interface circuit for a docking interface of a charging device (such as a charging gun), which supports wake-up with the charging device plugged in and also supports sleeping with the charging device plugged in. A wake-up channel of the wake-up chip used (such as a power supply chip or other chips with a wake-up function) should have a level-triggered or edge-triggered wake-up function.

For example, in a new energy electric vehicle product, a charging gun interface supports waking up by plugging a charging gun through an equivalent impedance circuit and a grounded communication interface (such as an AC_CC interface of an alternating current charging gun and a DC_CC2 interface of a direct current charging gun), and also supports sleeping without unplugging the charging gun under the control of a BMS, so that the BMS can enter sleep after charging is completed or stopped, which saves energy and reduces lead-acid consumption of the vehicle.

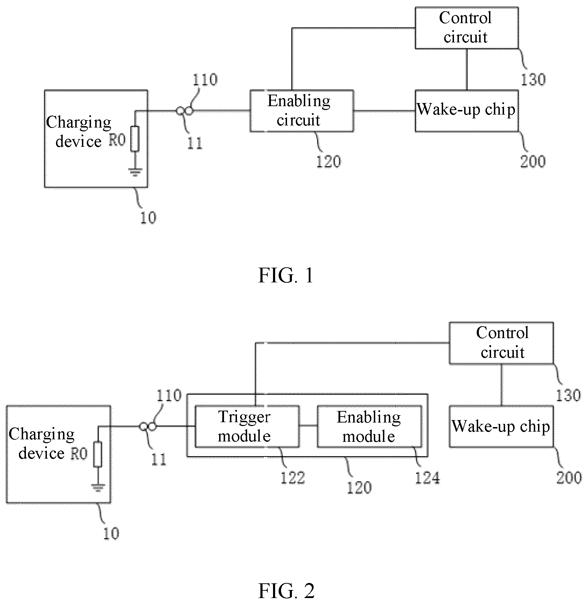

Referring to FIG. 1, FIG. 1 is a module diagram of a BMS sleep wake-up circuit according to some embodiments of this application. The BMS sleep wake-up circuit includes a first detection port 110, an enabling circuit 120, and a control circuit 130.

The first detection port 110 is configured to be connected to a communication interface 11 of a charging device 10. The enabling circuit 120 is connected to the first detection port 110 and a wake-up chip 200 of a BMS, and is configured to, in response to the charging device 10 being plugged in, generate an enabling level to wake up the BMS. The control circuit 130 outputs a self-locking signal to the wake-up chip 200 to maintain the wake-up chip 200 in an activated state, and is further configured to stop outputting the self-locking signal in response to a sleep signal, to turn off the wake-up chip 200 and allow the BMS to enter a sleeping state, solving the problem in related art that a BMS cannot enter a sleeping state unless a charging device 10 is unplugged, thereby reducing lead-acid consumption of the battery.

The charging device 10 is, for example, a charging gun or a general charging adapter available in the market. When the charging device 10 is plugged in, the BMS sleep wake-up circuit gives a wake-up signal to the first detection port 110, for example, a high-level signal, a low-level signal, a rising edge signal, or a falling edge signal. In response to the wake-up signal, the enabling circuit 120 generates an enabling level to enable the wake-up chip 200 of the BMS to activate, so that the wake-up chip 200 of the BMS wakes up the entire BMS, including the control circuit 130.

In some embodiments, an enabling level is generated in response to the charging device 10 being plugged in, and disappears after the wake-up chip 200 of the BMS is enabled to activate. In this case, a self-locking signal needs to be generated to the wake-up chip 200 before the enabling level disappears or before the wake-up chip 200 of the BMS is awakened and automatically shut down, to maintain the wake-up chip 200 in an activated state. Subsequently, when the BMS needs to sleep, the self-locking signal is canceled and the wake-up chip 200 is turned off, allowing the BMS to enter a sleeping state. It can be seen from this that as the enabling level disappears after waking up the BMS, there is no need to further detect whether the charging device 10 is plugged in to determine whether to enter sleep. This solves the problem in related art that a BMS cannot enter a sleeping state unless a charging device 10 is unplugged, thereby reducing lead-acid consumption of the battery.

It can be understood that generating the enabling level will inevitably produce an edge signal. For example, the enabling circuit 120 is triggered by the first detection port 110 being grounded, and generates an enabling level, which is a high level and necessarily includes a rising edge and a falling edge. Therefore, the wake-up chip 200 of the BMS may be enabled to activate at a high level or may be enabled to activate at a rising edge. The control circuit 130 is part of the BMS. When the BMS in sleeping state is awakened, the control circuit 130 is activated. Therefore, after the wake-up chip 200 is activated, the BMS in sleeping state is awakened. The control circuit 130 outputs a self-locking signal to maintain the wake-up chip 200 in an activated state, so that the wake-up chip 200 keeps waking up the BMS for working, thus completing the wake-up process of the BMS in sleeping state. It can be understood that to maintain the wake-up chip 200 in an activated state, the self-locking signal should be generated within duration of the enabling level or before the awakened wake-up chip 200 is automatically shut down.

Thereafter, for example, when charging is terminated after completion, if the lead-acid consumption of the battery is to be reduced, because the enabling level has stopped being output, the wake-up chip 200 can be turned off by directly stopping the output of the self-locking signal, allowing the BMS to enter a sleeping state. This BMS wake-up and sleep control method can be applied to the level-triggered and/or edge-triggered wake-up chip 200.

In some embodiments, the communication interface 11 of the charging device 10 is grounded through an impedance circuit R0.

The communication interface 11 of the charging device 10, such as an AC_CC interface of an alternating current charging gun or a DC_CC2 interface of a direct current charging gun, or a communication interface of a charging adapter, has an impedance circuit R0 as the equivalent resistance of the interface. The charging gun is used as an example. After the charging gun is connected to the charging interface, a corresponding interface of the charging interface is grounded through the communication interface 11 (that is, the AC_CC interface of the alternating current charging gun or the DC_CC2 interface of the direct current charging gun) to enter a charging gun connection stage, and in this stage, the communication interface 11 is in a grounded state.

It can be understood that when the charging gun is connected, the first detection port 110 is connected to the communication interface 11 of the charging device 10, and is pulled low to ground by the communication interface 11 of the charging device 10, in other words, is input with a low-level signal. Conversely, when the charging device 10 is not connected, the first detection port 110 is at a high level.

The enabling circuit 120, triggered by the first detection port 110 being grounded, determines that the charging device 10 is plugged in, and in response to the charging device 10 being plugged in, it outputs an enabling level to enable the wake-up chip 200 to activate to wake up the BMS in sleeping state. After that, the enabling level is canceled, and the control circuit 130 outputs a self-locking signal to keep the wake-up chip 200 waking up the BMS. Additionally, under the condition that the charging device 10 remains plugged in, because the enabling level is canceled, when sleep is needed later, after the self-locking signal is canceled, the wake-up chip 200 is turned off, so that the BMS can enter a sleeping state, solving the problem that the BMS cannot enter a sleeping state unless the charging device 10 is unplugged. Furthermore, as the generated enabling level inevitably generates an edge signal, the wake-up chip 200, whether edge-triggered or level-triggered, can meet the requirement of allowing the BMS to sleep while the charging device 10 remains plugged in, thereby reducing lead-acid consumption of the battery.

In some embodiments, the control circuit 130 is further configured to output the self-locking signal to the enabling circuit 120. The enabling circuit 120 is further configured to, in response to the self-locking signal, stop generating the enabling level and disconnect from the first detection port 110.

The output of the self-locking signal to the enabling circuit 120 is actually to maintain the state of the enabling circuit 120, triggered by the first detection port 110 being grounded, unchanged before the BMS enters next sleep. After the enabling level ends, the control circuit 130 can cancel the self-locking signal to enter sleep. Additionally, the self-locking signal can also cause the enabling circuit 120 to disconnect from the first detection port 110 so as to avoid mutual interference between the BMS sleep wake-up circuit and the communication interface 11 of the charging device 10, resulting in incorrect information collection of the communication interface 11 by the charging device 10 or resulting in the BMS sleep wake-up circuit failing to wake up the BMS or mistakenly entering a sleeping state.

In some embodiments, referring to FIG. 2, FIG. 2 is a module diagram of a BMS sleep wake-up circuit according to some embodiments of this application.

The enabling circuit 120 includes a trigger module 122 and an enabling module 124. The trigger module 122 is connected to the first detection port 110 and the control circuit 130, configured to generate a first level signal in response to the charging device 10 being plugged in, and further configured to, in response to the self-locking signal, maintain the first level signal and disconnect from the first detection port 110. The enabling module 124 is connected to the trigger module 122 and configured to generate one enabling level based on one first level signal. The enabling level is output to the wake-up chip 200 of the BMS to enable the wake-up chip 200 to activate to wake up the BMS.

It can be understood that when the charging gun is plugged, the trigger module 122 is triggered by the first detection port 110 being grounded to generate a low-level signal. When the charging gun is unplugged, the trigger module 122 outputs a high-level signal. The enabling module 124 is further configured to receive the high-level signal and stop outputting the enabling level (high level or rising edge), at which point it outputs a low-level signal. For the wake-up chip 200 triggered by a high level or rising edge, the low level cannot enable and activate a wake-up signal. The enabling module 124 generates one enabling level based on one first level signal. Therefore, the trigger module 122 also maintains the output of the low-level signal after receiving the self-locking signal, allowing the BMS to enter sleep as needed simply by canceling the self-locking signal. The trigger module 122 disconnects from the first detection port 110, avoiding mutual interference between the BMS sleep wake-up circuit and the charging device 10. This circuit design is simple and reliable.

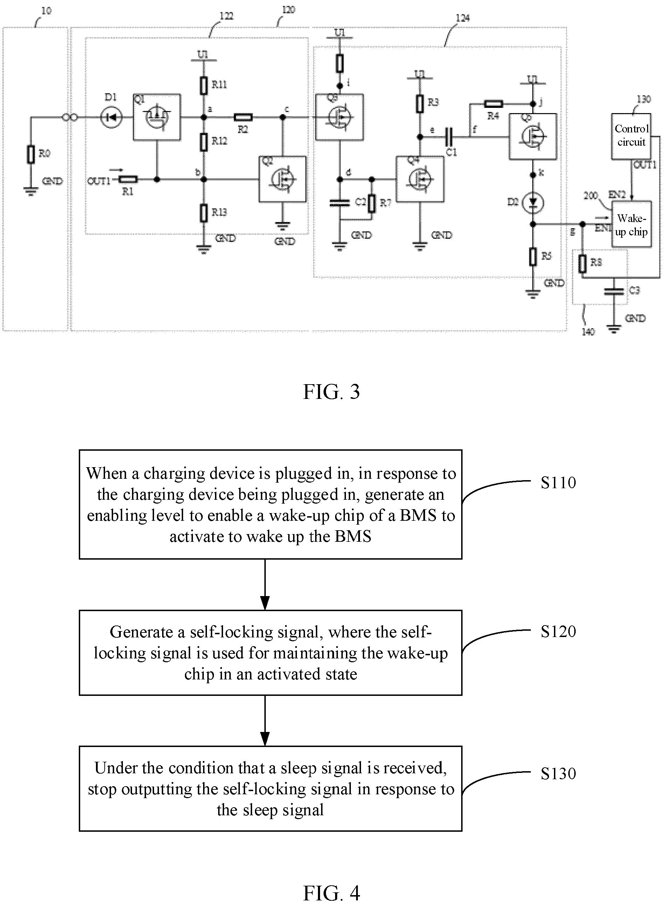

In some embodiments, referring to FIG. 3, FIG. 3 is a circuit diagram of a BMS sleep wake-up circuit according to some embodiments of this application. The trigger module 122 includes a first switching transistor Q1, a second switching transistor Q2, a potential-divider network, a first resistor R1, and a second resistor R2. The potential-divider network is connected to a power supply U1, and has a first potential-divider output terminal a and a second potential-divider output terminal b. A first terminal of the first switching transistor Q1 is connected to the first detection port 110, a second terminal of the first switching transistor Q1 is connected to the first potential-divider output terminal a, a control terminal of the first switching transistor Q1 and a control terminal of the second switching transistor Q2 are connected to the second potential-divider output terminal b, the control terminal of the first switching transistor Q1 and the control terminal of the second switching transistor Q2 are further connected to the control circuit 130 through the first resistor R1 for receiving the self-locking signal, a first terminal of the second resistor R2 is connected to the first potential-divider output terminal a, a second terminal of the second resistor R2 and a first terminal of the second switching transistor Q2 are connected together as an output of the trigger module 122, and a second terminal of the second switching transistor Q2 is grounded.

For example, the first switching transistor Q1 may be a semiconductor transistor turned on at a low level, such as a P-channel MOS tube or IGBT. The control end, first end, and second terminal of the first switching transistor Q1 are a gate, drain, and source of the MOS tube, respectively. The second switching transistor Q2 may be a semiconductor transistor conducted at a high level, such as an N-channel MOS tube or IGBT. The control end, first end, and second terminal of the first switching transistor Q1 are a gate, drain, and source of the MOS tube, respectively. The potential-divider network includes a resistor R11, a resistor R12, and a resistor R13 connected in series between the power supply U1 and ground. A series node of the resistor R11 and the resistor R12 is the first potential-divider output terminal a, and a series node of the resistor R12 and the resistor R13 is the second potential-divider output terminal b.

When the first detection port 110 is grounded, an output Vc of the trigger module 122 is a low-level signal. If the second switching transistor Q2 receives the self-locking signal (high level), the first switching transistor Q1 is turned off, and disconnects from the first detection port 110, but when the second switching transistor Q2 is turned on, the output Vc of the trigger module 122 can still be a low-level signal.

In the technical solution of this embodiment of this application, the trigger module 122 is disconnected from the first detection port 110 through the first switching transistor Q1 so as to avoid mutual interference between the trigger module 122 and the charging device 10, and also allows the second switching transistor Q2 to remain turned on, so that the trigger module 122 keeps outputting the first level signal, and the enabling circuit 120 is prevented from continuing to generate the enabling level. This allows the BMS to enter sleep smoothly as needed. The circuit has a simple structure, reliability, and low-cost.

In some embodiments, referring to FIG. 3, the trigger module 122 further includes a first unidirectional conduction element D1, and the first terminal of the first switching transistor Q1 is forward connected to the first detection port 110 through the first unidirectional conduction element D1.

For example, the first unidirectional conduction element D1 may be a diode. In the technical solution of this embodiment of this application, the first unidirectional conduction element D1 can prevent a current from the communication interface 11 of the charging device 10 from flowing into the BMS sleep wake-up circuit, thereby avoiding mutual interference.

In some embodiments, referring to FIG. 3, the enabling module 124 includes a third switching transistor Q3, a fourth switching transistor Q4, a fifth switching transistor Q5, an energy storage element C1, a potential-divider unit, a third resistor R3, a fourth resistor R4, and a fifth resistor R5.

A control terminal of the third switching transistor Q3 is connected to an output of the trigger module 122, a first terminal of the third switching transistor Q3 is connected to a power supply U1, a second terminal of the third switching transistor Q3 is grounded through the potential-divider unit, a second terminal of the third switching transistor Q3 is connected to a control terminal of the fourth switching transistor Q4, a first terminal of the fourth switching transistor Q4 is connected to the power supply U1 through the third resistor R3, a second terminal of the fourth switching transistor Q4 is grounded, a first terminal of the fourth switching transistor Q4 is connected to a first terminal of the energy storage element C1, a second terminal of the energy storage element C1 is connected to a control terminal of the fifth switching transistor Q5, a first terminal of the fifth switching transistor Q5 is connected to the power supply U1, the fourth resistor R4 is connected between a control terminal and the first terminal of the fifth switching transistor Q5, a second terminal of the fifth switching transistor Q5 is grounded through the fifth resistor R5, and the second terminal of the fifth switching transistor Q5 is connected to an output terminal of the enabling module 124.

For example, the third switching transistor Q3 may be a semiconductor transistor turned on at a low level, such as a P-channel MOS tube or IGBT. The control end, first end, and second terminal of the third switching transistor Q3 are a gate, source, and drain of the MOS tube, respectively. The fourth switching transistor Q4 and the fifth switching transistor Q5 may be semiconductor transistors conducted at a high level, such as N-channel MOS tubes or IGBTs. The control end, first end, and second terminal of the first switching transistor Q1 are a gate, drain, and source of the MOS tube, respectively. The energy storage element C1 may be a capacitor. The potential-divider unit includes a capacitor C2 and a resistor R7 connected in parallel. The capacitor C2 serves as energy storage, and keeps the stability of a gate level of the MOS tube.

The third switching transistor Q3 is turned on based on the first level signal to turn on the fourth switching transistor Q4 to drive the fifth switching transistor Q5 to turn on, so that the output terminal of the enabling module 124 outputs the enabling level, after the fourth switching transistor Q4 is turned on, the power supply U1 charges the energy storage element C1 through the fourth resistor R4, and after a voltage of the energy storage element C1 reaches a voltage of turning off the fifth switching transistor Q5, the fifth switching transistor Q5 is turned off to stop outputting the enabling level. Duration from the power supply U1 starting to charge the energy storage element C1 to reaching the voltage of turning off the fifth switching transistor Q5 is duration of outputting the enabling level.

In the technical solution of this embodiment of this application, when the fourth switching transistor Q4 is turned on, a voltage across the energy storage element C1, for example, a capacitor, does not change abruptly, so that the control terminal of the fifth switching transistor Q5 presents a low level and turns on, thereby outputting the enabling level. Simultaneously, the power supply U1 charges the energy storage element C1. The voltage rises until it causes the fifth switching transistor Q5 to turn off to stop outputting the enabling level. The fifth switching transistor Q5 can be turned on for a certain time window by configuring the duration of the enabling level for the charging process of the energy storage element C1, so as to output the enabling level and activate the wake-up chip 200, thereby waking up the BMS in sleeping state.

The power supply U1 may be a common power supply on a BMS board, typically 3.3 volts (V) or 5 V, or a level power supply adapted to the system.

In some embodiments, the enabling module 124 further includes a second unidirectional conduction element D2. The second unidirectional conduction element D2 is forward connected between the second terminal of the fifth switching transistor Q5 and the output terminal of the enabling module 124. The output terminal of the enabling module 124 is connected to a first enabling pin EN1 of the wake-up chip 200. This prevents a voltage from another wake-up source jointly using the first enabling pin EN1 of the wake-up chip 200 from being plugged in and affecting the normal working of the enable module 124.

In some embodiments, referring to FIG. 3, the control circuit 130 includes one of control chips in the BMS, and a locking pin of the control chip is connected to a second enabling pin EN2 of the wake-up chip 200 to provide the self-locking signal.

The enabling circuit 120 and the control circuit 130 are connected to different enabling pins of the wake-up chip 200, so that the control of the enabling level to the wake-up chip 200 and the control of the self-locking signal to the wake-up chip 200 are independent of each other. This allows the wake-up chip 200, once activated, to be locked by the self-locking signal output by the control chip. Thus, after the self-locking signal is canceled, the wake-up chip 200 can be turned off to achieve sleep, reducing lead-acid consumption of the battery.

In some embodiments, the wake-up chip 200 is a power supply chip for supplying power to the BMS, or a control chip for controlling the BMS to sleep or wake up.

It can be understood that the wake-up chip 200 is a component in the BMS. An external high-level signal or rising edge signal enables and activates the wake-up chip 200 through the first enabling pin EN1, and then activates the entire BMS to start working. For example, a power supply chip with a high-level and/or rising edge signal wake-up function outputs a required voltage for back-end electric load when receiving an external level signal (such as a high level), thereby allowing the entire BMS to start working. For example, a control chip with a level and/or rising edge signal wake-up function outputs, when receiving an external level signal (such as a high level), a control signal to activate the power supply module, allowing the power supply module to output a required voltage for back-end electric load, thereby allowing the entire BMS to start working.

The BMS sleep wake-up circuit of this embodiment of this application can be compatible with a level-triggered and/or edge-triggered power supply chip and control chip, so that the level-triggered and/or edge-triggered BMS can also be awakened and enter sleep when the charging device 10 is plugged in.

In some embodiments, the control circuit 130 and the wake-up chip 200 are a same control chip. During working, after the control chip is enabled and activated by receiving an enabling level through the first enabling pin EN1, it generates a self-locking signal to the second enabling pin EN2 to maintain a working state. When the self-locking signal is canceled, the wake-up chip 200 can be turned off to allow the BMS to enter sleep.

In some embodiments, referring to FIG. 3, the BMS sleep wake-up circuit further includes a sampling circuit 140. The sampling circuit 140 is connected to an output of the enabling circuit 120 and the control circuit 130. The sampling circuit 140 is configured to output a gun plugged signal when the enabling signal is detected; and to output a gun unplugged signal when no enabling signal is detected. In some embodiments, the control circuit 130 is further configured to stop outputting the self-locking signal upon receiving the gun unplugged signal, facilitating the BMS entering gun unplugging sleep.

The sampling circuit 140 includes a resistor R8 and a capacitor C3. One terminal of the resistor R8 is connected to the output of the enabling circuit 120, and another terminal is connected to the control circuit 130. The capacitor C3 is connected between the resistor R8 and ground. The gun unplugging signal may be a level signal, which is not limited herein. The control circuit 130 may cancel the self-locking signal based on the gun unplugged signal, thereby turning off the wake-up chip 200 and allowing the BMS to enter sleep.

In some embodiments, referring to FIG. 3, when the charging gun is not connected, to be specific, the impedance circuit R0 in FIG. 1 is not connected, Vba presents a certain voltage at this point, that is, Vba > Q1-Vgsth (threshold voltage between a gate and a source), so that the first switching transistor Q1 is turned on. In this case, the BMS is in a sleeping state, the control circuit 130 does not output a high level (self-locking signal), and the second switching transistor Q2 is in a cutoff turned-off state (that is, Vb < Q2-Vgsth); Vc = U1, the third switching transistor Q3 is also in a cutoff turned-off state (that is, Vci < Q3-Vgsth). A voltage across the energy storage element C1 is stable, the fifth switching transistor Q5 is in a cutoff turned-off state (that is, Vfj < Q5-Vgsth); and at this point Vg is a low level, and the BMS is not awakened and activated.

When the charging gun is connected, to be specific, the impedance circuit R0 in FIG. 1 is connected, Vc changes to a low level at this point, the third switching transistor Q3 is turned on (that is, Vci > Q3-Vgsth), Vd changes from a low level to a high level, the fourth switching transistor Q4 is turned on (that is, Vd > Q4-Vgsth), Ve changes from a high level to low level at this point, and a voltage across the energy storage element C1 does not change abruptly (capacitor characteristic), and Vf also changes from a high level to a low level, so that the fifth switching transistor Q5 is turned on (that is, Vfj > Q5-Vgsth). At this point, a state of Vg changes from a low level to a high level, in other words, the first enabling pin EN1 of the enabling wake-up chip 200 correspondingly changes from low to high, the edge/high-level wake-up function is triggered, and the BMS is activated to start working. After the BMS is activated, the control circuit 130 outputs a self-locking signal to the second enabling pin EN2 of the wake-up chip 200 to maintain the wake-up state. The self-locking signal also controls the first switching transistor Q1 to turn off and controls the second switching transistor Q2 to turn on, so that Vc remains at a low level. When the BMS needs to enter sleep with the charging gun plugged, to be specific, after the self-locking signal disappears, because Vc has always remained at a low level, if the device where the BMS is located remains plugged in, the BMS will enter sleep without causing an abrupt change in a voltage across the energy storage element C1 and repeatedly waking up the BMS.

According to a second aspect, referring to FIG. 4, FIG. 4 is a flowchart of a BMS sleep wake-up method according to some embodiments of this application and in conjunction with FIG. 1 to FIG. 3. An embodiment of this application provides a BMS sleep wake-up method, including the following steps.

Step S110. When a charging device is plugged in, in response to the charging device being plugged in, generate an enabling level to enable a wake-up chip of a BMS to activate to wake up the BMS.

Step S120. Generate a self-locking signal, where the self-locking signal is used for maintaining the wake-up chip in an activated state.

Step S130. Under the condition that a sleep signal is received, stop outputting the self-locking signal in response to the sleep signal.

In the technical solution of this embodiment of this application, when the charging device 10 is plugged in, in response to the charging device 10 being plugged in, the BMS generates an enabling level, enables the wake-up chip 200 to activate to wake up the BMS in sleeping state, and outputs a self-locking signal, so that the wake-up chip 200 keeps waking up the BMS. Additionally, under the condition that the charging device 10 remains plugged in, after the self-locking signal is canceled, the wake-up chip 200 is turned off, so that the BMS can enter a sleeping state, solving the problem in related art that a BMS cannot enter a sleeping state unless a charging device 10 is unplugged. Furthermore, as the generated enabling level generates an edge signal, the wake-up chip 200, whether edge-triggered or level-triggered, can meet the requirement of being able to sleep the BMS while keeping the charging device 10 connected, thereby reducing lead-acid consumption of the battery.

In some embodiments, the self-locking signal is also used for prohibiting generating the enabling level and for disconnecting the charging device 10.

In the technical solution of this embodiment of this application, the self-locking signal can disconnect a device from the communication interface 11 of the charging device 10 so as to avoid mutual interference between the device and the charging device 10, and it can also prevent the enabling level from continuing to be generated due to interference, allowing the BMS to enter sleep smoothly as needed.

According to a third aspect, referring to FIG. 3, an embodiment of this application provides a BMS, including the foregoing BMS sleep wake-up circuit.

In the technical solution of this embodiment of this application, when a charging device 10 is plugged in, in response to the charging device 10 being plugged in, the BMS generates an enabling level to enable a wake-up chip 200 to activate to wake up the BMS in a sleeping state. The awakened BMS outputs a self-locking signal to keep activating the wake-up chip 200. Additionally, under the condition that the charging device 10 remains plugged in, after the self-locking signal is canceled, the BMS can enter a sleep sate, solving the problem that the BMS cannot enter a sleeping state unless the charging device 10 is unplugged, thereby reducing lead-acid consumption of the battery.

According to a fourth aspect, an embodiment of this application provides an electric device, including a battery and the foregoing BMS.

The electric device may be a new energy electric vehicle, a cleaning robot, an energy storage device, or the like. In the technical solution of this embodiment of this application, when a charging device 10 is plugged in, in response to the charging device 10 being plugged in, the electric device generates an enabling level to enable a wake-up chip 200 to activate to wake up the BMS of the electric device. The awakened BMS outputs a self-locking signal to keep activating the wake-up chip 200. Additionally, under the condition that the charging device 10 remains plugged in, after the self-locking signal is canceled, the BMS can enter sleep, solving the problem that the BMS cannot enter a sleeping state unless the charging device 10 is unplugged, thereby reducing lead-acid consumption of the battery.

The foregoing description is merely an overview of the technical solution of this application. To more clearly understand the technical means in this application so that they can be implemented according to the content of the specification, and to make the foregoing and other objectives, features, and advantages of this application more obvious and easier to understand, the following describes specific embodiments of this application.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments to some or all technical features thereof without departing from the scope of the technical solutions of the embodiments of this application. All such modifications shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery management system, BMS, sleep wake-up circuit, comprising:
a first detection port (110) configured to be connected to a communication interface (11) of a charging device (10);
an enabling circuit (120) connected to the first detection port (110) and a wake-up chip (200) of a BMS, and configured to, in response to the charging device (10) being plugged in, generate an enabling level to wake up the BMS; and
a control circuit (130) configured to output a self-locking signal to the wake-up chip (200) to maintain the wake-up chip (200) in an activated state, and further configured to stop outputting the self-locking signal in response to a sleep signal, **characterized in that**
the control circuit (130) is further configured to output the self-locking signal to the enabling circuit (120), and the enabling circuit (120) is further configured to, in response to the self-locking signal, stop generating the enabling level and disconnect the enabling circuit (120) from the first detection port (110).

2. The BMS sleep wake-up circuit according to claim 1, wherein the communication interface (11) of the charging device (10) is grounded through an impedance circuit (R0).

3. The BMS sleep wake-up circuit according to claim 1 or 2, wherein the enabling circuit (120) comprises:
a trigger module (122) connected to the first detection port (110) and the control circuit (130), configured to, in response to the charging device (10) being plugged in, generate a first level signal, and further configured to, in response to the self-locking signal, maintain the first level signal and disconnect from the first detection port (110); and
an enabling module (124) connected to the trigger module (122), and configured to generate one enabling level based on one first level signal.

4. The BMS sleep wake-up circuit according to claim 3, wherein the trigger module (122) comprises a first switching transistor (Q1), a second switching transistor (Q2), a potential-divider network, a first resistor (R1), and a second resistor (R2), wherein the potential-divider network is configured to be connected to a power supply (U1) and has a first potential-divider output terminal and a second potential-divider output terminal; and
a first terminal of the first switching transistor (Q1) is connected to the first detection port (110), a second terminal of the first switching transistor (Q1) is connected to the first potential-divider output terminal, a control terminal of the first switching transistor (Q1) and a control terminal of the second switching transistor (Q2) are connected to the second potential-divider output terminal, the control terminal of the first switching transistor (Q1) and the control terminal of the second switching transistor (Q2) are further connected to the control circuit (130) through the first resistor (R1) for receiving the self-locking signal, a first terminal of the second resistor (R2) is connected to the first potential-divider output terminal, a second terminal of the second resistor (R2) and a first terminal of the second switching transistor (Q2) are connected together as an output of the trigger module (122), and a second terminal of the second switching transistor (Q2) is grounded.

5. The BMS sleep wake-up circuit according to claim 4, wherein the trigger module (122) further comprises a first unidirectional conduction element (D1), and the first terminal of the first switching transistor (Q1) is forward connected to the first detection port (110) through the first unidirectional conduction element (D1).

6. The BMS sleep wake-up circuit according to any one of claims 3 to 5, wherein the enabling module (124) comprises a third switching transistor (Q3), a fourth switching transistor (Q4), a fifth switching transistor (Q5), a potential-divider unit, an energy storage element (C1), a third resistor (R3), a fourth resistor (R4), and a fifth resistor (R5); wherein
a control terminal of the third switching transistor (Q3) is connected to an output of the trigger module (122), a first terminal of the third switching transistor (Q3) is connected to a power supply (U1), a second terminal of the third switching transistor (Q3) is grounded through the potential-divider unit, a second terminal of the third switching transistor (Q3) is connected to a control terminal of the fourth switching transistor (Q4), a first terminal of the fourth switching transistor (Q4) is configured to be connected to the power supply (U1) through the third resistor (R3), a second terminal of the fourth switching transistor (Q4) is grounded, a first terminal of the fourth switching transistor (Q4) is connected to a first terminal of the energy storage element (C1), a second terminal of the energy storage element (C1) is connected to a control terminal of the fifth switching transistor (Q5), a first terminal of the fifth switching transistor (Q5) is configured to be connected to the power supply (U1), the fourth resistor (R4) is connected between a control terminal and the first terminal of the fifth switching transistor (Q5), a second terminal of the fifth switching transistor (Q5) is grounded through the fifth resistor (R5), and the second terminal of the fifth switching transistor (Q5) is connected to an output terminal of the enabling module (124); and
the third switching transistor (Q3) is turned on based on the first level signal to turn on the fourth switching transistor (Q4) to drive the fifth switching transistor (Q5) to turn on, so that the output terminal of the enabling module (124) outputs the enabling level, after the fourth switching transistor (Q4) is turned on, the power supply (U1) is configured to charge the energy storage element (C1) through the fourth resistor (R4), and after a voltage of the energy storage element (C1) reaches a voltage of turning off the fifth switching transistor (Q5), the fifth switching transistor (Q5) is turned off to stop outputting the enabling level;
wherein duration from the power supply (U1) starting to charge the energy storage element (C1) to reaching the voltage of turning off the fifth switching transistor (Q5) is duration of outputting the enabling level.

7. The BMS sleep wake-up circuit according to claim 6, wherein the enabling module (124) further comprises a second unidirectional conduction element (D2), wherein the second unidirectional conduction element (D2) is forward connected between the second terminal of the fifth switching transistor (Q5) and the output terminal of the enabling module (124), and the output terminal of the enabling module (124) is connected to a first enabling pin (EN1) of the wake-up chip (200).

8. The BMS sleep wake-up circuit according to claim 7, wherein the control circuit (130) comprises one of control chips in the BMS, and a self-locking pin of the control chip is connected to a second enabling pin (EN2) of the wake-up chip (200) and the enabling circuit (120) to provide the self-locking signal.

9. The BMS sleep wake-up circuit according to claim 1, wherein the wake-up chip (200) is a power supply chip for supplying power to the BMS, or a control chip for controlling the BMS to sleep or wake up.

10. The BMS sleep wake-up circuit according to claim 1 or claim 8 or 9, wherein the control circuit (130) and the wake-up chip (200) are same control chips.

11. The BMS sleep wake-up circuit according to claim 1, further comprising a sampling circuit (140), wherein the sampling circuit (140) is connected to an output of the enabling circuit (120), configured to output a gun plugged signal when the enabling signal is detected, and further configured to output a gun unplugged signal when no enabling signal is detected;
preferably, the control circuit (130) is connected to the sampling circuit (140), and the control circuit (130) is further configured to stop outputting the self-locking signal upon receiving the gun unplugged signal.

12. A battery management system, BMS, sleep wake-up method, comprising:
when a charging device is plugged in, in response to the charging device being plugged in, generating (S110), by an enabling circuit (120), an enabling level to enable a wake-up chip of a BMS to activate to wake up the BMS;
generating (S120), by a control circuit (130), a self-locking signal, wherein the self-locking signal is used for maintaining the wake-up chip in an activated state; and
under the condition that a sleep signal is received, stopping outputting (S130) the self-locking signal by the control circuit (130) in response to the sleep signal, **characterized in that**
the self-locking signal is further used for prohibiting the enabling circuit (120) from generating the enabling level and for disconnecting the enabling circuit (120) from the charging device.

13. A battery management system, BMS, comprising the BMS sleep wake-up circuit according to any one of claims 1 to 11.

## Patentansprüche

1. Batteriemanagementsystem (BMS)-Schlaf-Aufweck-Schaltung, umfassend:
einen ersten Erkennungsanschluss (110), der dafür konfiguriert ist, mit einer Kommunikationsschnittstelle (11) eines Ladegeräts (10) verbunden zu werden;
eine Aktivierungsschaltung (120), die mit dem ersten Erkennungsanschluss (110) und einem Aufweck-Chip (200) eines BMS verbunden ist und dafür konfiguriert ist, als Reaktion auf das Einstecken des Ladegeräts (10) ein Aktivierungsniveau zu erzeugen, um das BMS aufzuwecken; und
eine Steuerschaltung (130), die dafür konfiguriert ist, ein Selbsthaltesignal an den Aufweck-Chip (200) auszugeben, um den Aufweck-Chip (200) in einem aktivierten Zustand zu halten, und ferner konfiguriert ist, die Ausgabe des Selbsthaltesignals als Reaktion auf ein Schlafsignal zu stoppen, **dadurch gekennzeichnet, dass** die Steuerschaltung (130) ferner dafür konfiguriert ist, das Selbsthaltesignal an die Aktivierungsschaltung (120) auszugeben, und die Aktivierungsschaltung (120) ferner dafür konfiguriert ist, als Reaktion auf das Selbsthaltesignal die Erzeugung des Aktivierungsniveaus zu stoppen und die Aktivierungsschaltung (120) vom ersten Erkennungsanschluss (110) zu trennen.

2. BMS-Schlaf-Aufweck-Schaltung nach Anspruch 1, wobei die Kommunikationsschnittstelle (11) des Ladegeräts (10) über eine Impedanzschaltung (R0) geerdet ist.

3. BMS-Schlaf-Aufweck-Schaltung nach Anspruch 1 oder 2, wobei die Aktivierungsschaltung (120) umfasst:
ein Trigger-Modul (122), das mit dem ersten Erkennungsanschluss (110) und der Steuerschaltung (130) verbunden ist, konfiguriert, als Reaktion auf das Einstecken des Ladegeräts (10) ein erstes Pegelsignal zu erzeugen, und ferner konfiguriert, als Reaktion auf das Selbsthaltesignal das erste Pegelsignal beizubehalten und die Verbindung zum ersten Erkennungsanschluss (110) zu trennen; und
ein Aktivierungsmodul (124), das mit dem Trigger-Modul (122) verbunden ist und dafür konfiguriert ist, ein Aktivierungsniveau basierend auf einem ersten Pegelsignal zu erzeugen.

4. BMS-Schlaf-Aufweck-Schaltung nach Anspruch 3, wobei das Trigger-Modul (122) einen ersten Schalttransistor (Q1), einen zweiten Schalttransistor (Q2), ein Spannungsteiler-Netzwerk, einen ersten Widerstand (R1) und einen zweiten Widerstand (R2) umfasst, wobei das Spannungsteiler-Netzwerk dafür konfiguriert ist, mit einer Stromversorgung (U1) verbunden zu werden und einen ersten Spannungsteiler-Ausgangsanschluss und einen zweiten Spannungsteiler-Ausgangsanschluss aufweist; und
ein erster Anschluss des ersten Schalttransistors (Q1) ist mit dem ersten Erkennungsanschluss (110) verbunden, ein zweiter Anschluss des ersten Schalttransistors (Q1) ist mit dem ersten Spannungsteiler-Ausgangsanschluss verbunden, ein Steueranschluss des ersten Schalttransistors (Q1) und ein Steueranschluss des zweiten Schalttransistors (Q2) sind mit dem zweiten Spannungsteiler-Ausgangsanschluss verbunden, die Steueranschlüsse des ersten und zweiten Schalttransistors (Q1, Q2) sind ferner über den ersten Widerstand (R1) mit der Steuerschaltung (130) verbunden, um das Selbsthaltesignal zu empfangen, ein erster Anschluss des zweiten Widerstands (R2) ist mit dem ersten Spannungsteiler-Ausgangsanschluss verbunden, ein zweiter Anschluss des zweiten Widerstands (R2) und ein erster Anschluss des zweiten Schalttransistors (Q2) sind zusammen als Ausgang des Trigger-Moduls (122) verbunden, und ein zweiter Anschluss des zweiten Schalttransistors (Q2) ist geerdet.

5. BMS-Schlaf-Aufweck-Schaltung nach Anspruch 4, wobei das Trigger-Modul (122) ferner ein erstes unidirektionales Leitungselement (D1) umfasst, und der erste Anschluss des ersten Schalttransistors (Q1) ist über das erste unidirektionale Leitungselement (D1) in Vorwärtsrichtung mit dem ersten Erkennungsanschluss (110) verbunden.

6. BMS-Schlaf-Aufweck-Schaltung nach einem der Ansprüche 3 bis 5, wobei das Aktivierungsmodul (124) einen dritten Schalttransistor (Q3), einen vierten Schalttransistor (Q4), einen fünften Schalttransistor (Q5), eine Spannungsteiler-Einheit, ein Energiespeicherelement (C1), einen dritten Widerstand (R3), einen vierten Widerstand (R4) und einen fünften Widerstand (R5) umfasst; wobei ein Steueranschluss des dritten Schalttransistors (Q3) mit einem Ausgang des Trigger-Moduls (122) verbunden ist, ein erster Anschluss des dritten Schalttransistors (Q3) mit einer Stromversorgung (U1) verbunden ist, ein zweiter Anschluss des dritten Schalttransistors (Q3) über die Spannungsteiler-Einheit geerdet ist, der zweite Anschluss des dritten Schalttransistors (Q3) mit einem Steueranschluss des vierten Schalttransistors (Q4) verbunden ist, ein erster Anschluss des vierten Schalttransistors (Q4) über den dritten Widerstand (R3) mit der Stromversorgung (U1) verbunden ist, ein zweiter Anschluss des vierten Schalttransistors (Q4) geerdet ist, der erste Anschluss des vierten Schalttransistors (Q4) mit einem ersten Anschluss des Energiespeicherelements (C1) verbunden ist, ein zweiter Anschluss des Energiespeicherelements (C1) mit einem Steueranschluss des fünften Schalttransistors (Q5) verbunden ist, ein erster Anschluss des fünften Schalttransistors (Q5) mit der Stromversorgung (U1) verbunden ist, der vierte Widerstand (R4) zwischen einem Steueranschluss und dem ersten Anschluss des fünften Schalttransistors (Q5) verbunden ist, ein zweiter Anschluss des fünften Schalttransistors (Q5) über den fünften Widerstand (R5) geerdet ist, und der zweite Anschluss des fünften Schalttransistors (Q5) mit einem Ausgangsanschluss des Aktivierungsmoduls (124) verbunden ist; und
der dritte Schalttransistor (Q3) basierend auf dem ersten Pegelsignal eingeschaltet wird, um den vierten Schalttransistor (Q4) einzuschalten, der den fünften Schalttransistor (Q5) einschaltet, sodass der Ausgangsanschluss des Aktivierungsmoduls (124) das Aktivierungsniveau ausgibt, nachdem der vierte Schalttransistor (Q4) eingeschaltet ist, die Stromversorgung (U1) konfiguriert ist, das Energiespeicherelement (C1) über den vierten Widerstand (R4) aufzuladen, und nachdem die Spannung des Energiespeicherelements (C1) die Abschaltspannung des fünften Schalttransistors (Q5) erreicht, wird der fünfte Schalttransistor (Q5) abgeschaltet, um die Ausgabe des Aktivierungsniveaus zu stoppen;
wobei die Dauer vom Beginn des Aufladens des Energiespeicherelements (C1) durch die Stromversorgung (U1) bis zum Erreichen der Abschaltspannung des fünften Schalttransistors (Q5) die Dauer der Ausgabe des Aktivierungsniveaus ist.

7. BMS-Schlaf-Aufweck-Schaltung nach Anspruch 6, wobei das Aktivierungsmodul (124) ferner ein zweites unidirektionales Leitungselement (D2) umfasst, wobei das zweite unidirektionale Leitungselement (D2) in Vorwärtsrichtung zwischen dem zweiten Anschluss des fünften Schalttransistors (Q5) und dem Ausgangsanschluss des Aktivierungsmoduls (124) verbunden ist, und der Ausgangsanschluss des Aktivierungsmoduls (124) mit einem ersten Aktivierungs-Pin (EN1) des Aufweck-Chips (200) verbunden ist.

8. BMS-Schlaf-Aufweck-Schaltung nach Anspruch 7, wobei die Steuerschaltung (130) einen der Steuerchips im BMS umfasst und ein Selbsthalte-Pin des Steuerchips mit einem zweiten Aktivierungs-Pin (EN2) des Aufweck-Chips (200) und der Aktivierungsschaltung (120) verbunden ist, um das Selbsthaltesignal bereitzustellen.

9. BMS-Schlaf-Aufweck-Schaltung nach Anspruch 1, wobei der Aufweck-Chip (200) ein Stromversorgungs-Chip zur Versorgung des BMS oder ein Steuerchip zur Steuerung des Schlaf- oder Aufweckzustands des BMS ist.

10. BMS-Schlaf-Aufweck-Schaltung nach Anspruch 1 oder Anspruch 8 oder 9, wobei die Steuerschaltung (130) und der Aufweck-Chip (200) dieselben Steuerchips sind.

11. BMS-Schlaf-Aufweck-Schaltung nach Anspruch 1, ferner umfassend eine Abtastschaltung (140), wobei die Abtastschaltung (140) mit einem Ausgang der Aktivierungsschaltung (120) verbunden ist, konfiguriert, ein "Gun-Plugged"-Signal auszugeben, wenn das Aktivierungssignal erkannt wird, und ferner konfiguriert, ein "Gun-Unplugged"-Signal auszugeben, wenn kein Aktivierungssignal erkannt wird;
vorzugsweise ist die Steuerschaltung (130) mit der Abtastschaltung (140) verbunden, und die Steuerschaltung (130) ist ferner konfiguriert, die Ausgabe des Selbsthaltesignals zu stoppen, wenn das "Gun-Unplugged"-Signal empfangen wird.

12. BMS-Schlaf-Aufweck-Verfahren, umfassend:
wenn ein Ladegerät eingesteckt ist, als Reaktion auf das Einstecken des Ladegeräts Erzeugen (S110) eines Aktivierungsniveaus durch eine Aktivierungsschaltung (120), um einen Aufweck-Chip eines BMS zu aktivieren, um das BMS aufzuwecken;
Erzeugen (S120) eines Selbsthaltesignals durch eine Steuerschaltung (130), wobei das Selbsthaltesignal dazu dient, den Aufweck-Chip in einem aktivierten Zustand zu halten; und
unter der Bedingung, dass ein Schlafsignal empfangen wird, Stoppen (S130) der Ausgabe des Selbsthaltesignals durch die Steuerschaltung (130) als Reaktion auf das Schlafsignal, **dadurch gekennzeichnet, dass**
das Selbsthaltesignal ferner dazu dient, die Aktivierungsschaltung (120) daran zu hindern, das Aktivierungsniveau zu erzeugen, und die Aktivierungsschaltung (120) vom Ladegerät zu trennen.

13. Batteriemanagementsystem (BMS), umfassend die BMS-Schlaf-Aufweck-Schaltung nach einem der Ansprüche 1 bis 11.

## Revendications

1. Circuit de réveil en mode veille d'un système de gestion de batterie (BMS), comprenant :
un premier port de détection (110) configuré pour être connecté à une interface de communication (11) d'un dispositif de charge (10) ;
un circuit d'activation (120) connecté au premier port de détection (110) et à une puce de réveil (200) d'un BMS, et configuré pour, en réponse au branchement du dispositif de charge (10), générer un niveau d'activation pour réveiller le BMS ; et
un circuit de commande (130) configuré pour émettre un signal d'auto-maintien à la puce de réveil (200) afin de maintenir la puce de réveil (200) dans un état activé, et en outre configuré pour arrêter l'émission du signal d'auto-maintien en réponse à un signal de veille, **caractérisé en ce que**
le circuit de commande (130) est en outre configuré pour émettre le signal d'auto-maintien au circuit d'activation (120), et le circuit d'activation (120) est en outre configuré pour, en réponse au signal d'auto-maintien, arrêter la génération du niveau d'activation et déconnecter le circuit d'activation (120) du premier port de détection (110).

2. Circuit de réveil en mode veille d'un BMS selon la revendication 1, dans lequel l'interface de communication (11) du dispositif de charge (10) est mise à la terre via un circuit d'impédance (R0).

3. Circuit de réveil en mode veille d'un BMS selon la revendication 1 ou 2, dans lequel le circuit d'activation (120) comprend :
un module de déclenchement (122) connecté au premier port de détection (110) et au circuit de commande (130), configuré pour, en réponse au branchement du dispositif de charge (10), générer un premier signal de niveau, et en outre configuré pour, en réponse au signal d'auto-maintien, maintenir le premier signal de niveau et se déconnecter du premier port de détection (110) ; et
un module d'activation (124) connecté au module de déclenchement (122) et configuré pour générer un niveau d'activation basé sur un premier signal de niveau.

4. Circuit de réveil en mode veille d'un BMS selon la revendication 3, dans lequel le module de déclenchement (122) comprend un premier transistor de commutation (Q1), un deuxième transistor de commutation (Q2), un réseau diviseur de tension, une première résistance (R1) et une deuxième résistance (R2), le réseau diviseur de tension étant configuré pour être connecté à une alimentation électrique (U1) et comportant une première borne de sortie et une deuxième borne de sortie ; et une première borne du premier transistor de commutation (Q1) est connectée au premier port de détection (110), une deuxième borne du premier transistor de commutation (Q1) est connectée à la première borne de sortie du diviseur, une borne de commande du premier transistor de commutation (Q1) et une borne de commande du deuxième transistor de commutation (Q2) sont connectées à la deuxième borne de sortie du diviseur, les bornes de commande du premier et du deuxième transistor de commutation (Q1, Q2) étant en outre connectées au circuit de commande (130) via la première résistance (R1) pour recevoir le signal d'auto-maintien, une première borne de la deuxième résistance (R2) est connectée à la première borne de sortie du diviseur, une deuxième borne de la deuxième résistance (R2) et une première borne du deuxième transistor de commutation (Q2) sont reliées ensemble comme sortie du module de déclenchement (122), et une deuxième borne du deuxième transistor de commutation (Q2) est mise à la terre.

5. Circuit de réveil en mode veille d'un BMS selon la revendication 4, dans lequel le module de déclenchement (122) comprend en outre un premier élément de conduction unidirectionnelle (D1), et la première borne du premier transistor de commutation (Q1) est connectée en avant au premier port de détection (110) via le premier élément de conduction unidirectionnelle (D1).

6. Circuit de réveil en mode veille d'un BMS selon l'une des revendications 3 à 5, dans lequel le module d'activation (124) comprend un troisième transistor de commutation (Q3), un quatrième transistor de commutation (Q4), un cinquième transistor de commutation (Q5), une unité diviseur de tension, un élément de stockage d'énergie (C1), une troisième résistance (R3), une quatrième résistance (R4) et une cinquième résistance (R5) ; dans lequel
une borne de commande du troisième transistor de commutation (Q3) est connectée à une sortie du module de déclenchement (122), une première borne du troisième transistor de commutation (Q3) est connectée à une alimentation électrique (U1), une deuxième borne du troisième transistor de commutation (Q3) est mise à la terre via l'unité diviseur de tension, la deuxième borne du troisième transistor de commutation (Q3) est connectée à une borne de commande du quatrième transistor de commutation (Q4), une première borne du quatrième transistor de commutation (Q4) est configurée pour être connectée à l'alimentation électrique (U1) via la troisième résistance (R3), une deuxième borne du quatrième transistor de commutation (Q4) est mise à la terre, la première borne du quatrième transistor de commutation (Q4) est connectée à une première borne de l'élément de stockage d'énergie (C1), une deuxième borne de l'élément de stockage d'énergie (C1) est connectée à une borne de commande du cinquième transistor de commutation (Q5), une première borne du cinquième transistor de commutation (Q5) est configurée pour être connectée à l'alimentation électrique (U1), la quatrième résistance (R4) est connectée entre une borne de commande et la première borne du cinquième transistor de commutation (Q5), une deuxième borne du cinquième transistor de commutation (Q5) est mise à la terre via la cinquième résistance (R5), et la deuxième borne du cinquième transistor de commutation (Q5) est connectée à une borne de sortie du module d'activation (124) ; et
le troisième transistor de commutation (Q3) est activé sur la base du premier signal de niveau pour activer le quatrième transistor de commutation (Q4) afin d'actionner le cinquième transistor de commutation (Q5), de sorte que la borne de sortie du module d'activation (124) émette le niveau d'activation, après l'activation du quatrième transistor de commutation (Q4), l'alimentation électrique (U1) est configurée pour charger l'élément de stockage d'énergie (C1) via la quatrième résistance (R4), et après que la tension de l'élément de stockage d'énergie (C1) atteint la tension de désactivation du cinquième transistor de commutation (Q5), le cinquième transistor de commutation (Q5) est désactivé pour arrêter l'émission du niveau d'activation ;
dans lequel la durée entre le début de la charge de l'élément de stockage d'énergie (C1) par l'alimentation électrique (U1) et l'atteinte de la tension de désactivation du cinquième transistor de commutation (Q5) est la durée d'émission du niveau d'activation.

7. Circuit de réveil en mode veille d'un BMS selon la revendication 6, dans lequel le module d'activation (124) comprend en outre un deuxième élément de conduction unidirectionnelle (D2), le deuxième élément de conduction unidirectionnelle (D2) étant connecté en avant entre la deuxième borne du cinquième transistor de commutation (Q5) et la borne de sortie du module d'activation (124), et la borne de sortie du module d'activation (124) étant connectée à une première broche d'activation (EN1) de la puce de réveil (200).

8. Circuit de réveil en mode veille d'un BMS selon la revendication 7, dans lequel le circuit de commande (130) comprend l'une des puces de commande du BMS, et une broche d'auto-maintien de la puce de commande est connectée à une deuxième broche d'activation (EN2) de la puce de réveil (200) et au circuit d'activation (120) pour fournir le signal d'auto-maintien.

9. Circuit de réveil en mode veille d'un BMS selon la revendication 1, dans lequel la puce de réveil (200) est une puce d'alimentation pour fournir de l'énergie au BMS, ou une puce de commande pour contrôler le mode veille ou réveil du BMS.

10. Circuit de réveil en mode veille d'un BMS selon la revendication 1 ou 8 ou 9, dans lequel le circuit de commande (130) et la puce de réveil (200) sont les mêmes puces de commande.

11. Circuit de réveil en mode veille d'un BMS selon la revendication 1, comprenant en outre un circuit d'échantillonnage (140), dans lequel le circuit d'échantillonnage (140) est connecté à une sortie du circuit d'activation (120), configuré pour émettre un signal « gun plugged » lorsque le signal d'activation est détecté, et en outre configuré pour émettre un signal « gun unplugged » lorsqu'aucun signal d'activation n'est détecté ;
de préférence, le circuit de commande (130) est connecté au circuit d'échantillonnage (140), et le circuit de commande (130) est en outre configuré pour arrêter l'émission du signal d'auto-maintien lors de la réception du signal « gun unplugged ».

12. Procédé de réveil en mode veille d'un BMS, comprenant :
lorsqu'un dispositif de charge est branché, en réponse au branchement du dispositif de charge, génération (S110), par un circuit d'activation (120), d'un niveau d'activation pour activer une puce de réveil d'un BMS afin de réveiller le BMS ;
génération (S120), par un circuit de commande (130), d'un signal d'auto-maintien, le signal d'auto-maintien étant utilisé pour maintenir la puce de réveil dans un état activé ; et
sous la condition qu'un signal de veille soit reçu, arrêt (S130) de l'émission du signal d'auto-maintien par le circuit de commande (130) en réponse au signal de veille, **caractérisé en ce que**
le signal d'auto-maintien est en outre utilisé pour interdire au circuit d'activation (120) de générer le niveau d'activation et pour déconnecter le circuit d'activation (120) du dispositif de charge.

13. Système de gestion de batterie (BMS), comprenant le circuit de réveil en mode veille d'un BMS selon l'une des revendications 1 à 11.
